# EUROPEAN PATENT APPLICATION

(11) **EP 4 155 279 A1**
(43) Date of publication of application: **29.03.2023**
(21) Application number: 21198298.8
(22) Date of filing: 22.09.2021
(51) Int. Cl.: C04B 20/02, C04B 103/00

(54) **METHOD FOR MANUFACTURING SUPPLEMENTARY CEMENTITIOUS MATERIAL**

(71) Applicant: HeidelbergCement AG, 69120 Heidelberg (DE)
(72) Inventor: SKOCEK, Jan, 69151 Neckargemünd (DE); ZAJAC, Maciej, 69126 Heidelberg (DE)
(74) Representative: Zellentin & Partner mbB Patentanwälte

(57) **Abstract**

Method for producing a pozzolanic product by hydrothermal treatment of a feedstock comprising silicate, aluminate, and/or aluminosilicate materials, and a source of calcium ions, wherein the feedstock has a molar ratio of Ca:(Si+AI) from 0.4 to 1.2 and a maximum content of hydrated cement paste of 10 wt.-%, to provide a hydrate product, and subsequent carbonation of the hydrate product to provide a pozzolanic product comprising calcium carbonate and silica gel, alumina gel and/or silica-alumina gel; pozzolanic product obtainable by the method; use of the pozzolanic product as supplementary cementitious material; method for manufacturing a composite cement and a composite cement comprising the pozzolanic product and an hydraulic cement.

## Description

The present invention relates to a method for producing a pozzolanic product. Further, the invention relates to the pozzolanic product obtainable by the method according to the invention. The invention also relates to the use of the pozzolanic product as supplementary cementitious material. Moreover, the invention relates to a method for manufacturing a composite cement and a composite cement comprising the pozzolanic product and an hydraulic cement.

Cement industry is struggling with the high CO₂ emissions related to the production of cement clinker. The easiest way to limit this environmental footprint is to produce composite cements or to increase the usage of supplementary cementitious material during the concrete production. Unfortunately, the increase of the proportion of the composite cements in the product portfolio is limited by the availability of high quality supplementary cementitious material, i.e. reactive materials resulting in appreciable strength evolution.

EP 2 878 585 A1 describes a method for manufacturing a C-S-H seed by hydrothermal activation of industrial waste and by-products. The following materials are listed as potential sources of industrial wastes and by-products: fly ash, silica fume, ground granulated blast furnace slag, salt slag and acetylene lime slurry. Moreover, the described method relates to a hydrothermal activation with an obligatory use of doping agents selected from B, P and S in order to generate the required calcium silicate hydrate. Neither the hydrothermal activation of the aggregates fraction nor the carbonation of the hydrothermally activated material is described.

WO 2014/183846 A1 describes a method for enhancing the latent hydraulic and/or pozzolanic reactivity of materials comprising sources for CaO and SiO₂ and Al₂O₃ by mixing this material with water and treating the mixture hydrothermally in an autoclave at 100 °C to 300 °C for 0.1 to 24 hour, preferably tempering the autoclaved product at 350 to 600 °C, wherein the heating rate ranges from 10 to 6000 °C/minute and the residence time ranges from 0.01 to 600 minutes, in order to obtain supplementary cementitious material with enhanced reactivity.

According to US 2020/0247717 A1 synthetic pozzolans are produced using local materials to provide a cementitious material that is uniform in chemistry and properties independent of the location where the materials are obtained. Two methods of production are described, a high temperature process in which materials are processed in a semi-molten or molten state and a low temperature aqueous process. The latter is accomplished by exploiting the dissolution mechanism of many common silicate minerals.

Further, there are numerous proposals to make the fines in concrete demolition waste useful as supplementary cementitious material, see for example WO 2020/239681 A1, EP 3 724 147 A1 and the article Skocek et al. "Carbon Capture and Utilization by mineralization of cement pastes derived from recycled concrete", Sci Rep 10, 5614 (2020) (https://doi.org/10.1038/s41598-020-62503-z) and references cited therein. But it is not easy to obtain good quality supplementary cementitious material from the waste with its very variable composition. Therefore, attempts were made to improve carbonation and/or the carbonated product. Among them are special processes as in EP 3 744 700 A1 or addition of substances that improve the carbonation process as in EP 3 778 525 A1. Further proposals are found in the documents cited therein.

Not prior published EP21176008.7 describes a combination of hydrothermal treatment and carbonation for enhancing and accelerating of the carbonation of recycled waste concrete to increase its CO₂ uptake and activating also parts of the contained aggregates.

Although the carbonated fines as supplementary cementitious material are advantageous in that they allow reuse of waste as valuable product and sequester carbon dioxide at the same time, there is still a need for providing reactive supplementary cementitious material and efficient ways to recycle waste and by-products. Accordingly, it is an object of the invention to provide reactive supplementary cementitious material and/or to extend the range of methods making waste and by-products useful while energy consumption should preferably be low.

Surprisingly it was now found that silicate and aluminosilicate materials can be transformed into reactive supplementary cementitious materials by the combination of hydrothermal treatment in the presence of calcium ions and subsequent carbonation. The obtained product comprising calcium carbonate and silica or alumina or silica-alumina gel shows a good reactivity, comparable to known supplementary cementitious materials, e.g. carbonated recycled concrete fines or calcined clay and limestone.

Thus, the mentioned problem is solved by a method for manufacturing a pozzolanic product comprising hydrothermal treatment of a feedstock comprising silicate, aluminate, and/or aluminosilicate materials and a source of calcium ions, wherein the feedstock has a molar ratio of Ca:(Si+Al) from 0.4 to 1.2 and a maximum content of hydrated cement paste of 10 wt.-%, providing a hydrate product and subsequent carbonation of the hydrate product providing the pozzolanic product comprising calcium carbonate and silica, alumina and/or silica-alumina gel. The problem is further solved by a pozzolanic product obtainable by the method and comprising the silica or alumina or silica-alumina gel, its use as supplementary cementitious material, as well as a method for manufacturing composite cements comprising hydrothermal treatment of a feedstock comprising silicate, aluminate, and/or aluminosilicate materials and a source of calcium ions, wherein the feedstock has a molar ratio of Ca:(Si+Al) from 0.4 to 1.2 and a maximum content of hydrated cement paste of 10 wt.-%, to provide a hydrate product, subsequent carbonation of the hydrate product to provide a pozzolanic product comprising calcium carbonate and silica, alumina and/or silica-alumina gel, and mixing the pozzolanic product with an hydraulic cement and the composite cement obtainable by the method. The amount of hydrated cement paste in the feedstock is ≤ 10 wt.-%, preferably ≤ 5 wt.-%, most preferred ≤ 2 wt.-%, i.e. the feedstock, and especially the silicate, aluminate, and/or aluminosilicate material, is essentially cement paste free. Cement paste is only present as 'contamination', e.g. in a construction demolition waste used as component of the feedstock and especially as the silicate, aluminate, and/or aluminosilicate material. On the other hand, for the source of calcium ions non-hydrated cement, CKD, CaO, Ca(OH)₂ (e.g. as carbide lime), high calcium fly ashes and slags and other such materials are very suitable.

When silicate, aluminate and/or aluminosilicate materials low in calcium ions are hydrothermally treated in the presence of calcium ions followed by carbonation, large quantities of highly reactive silica, alumina or silica-alumina gel are formed while mineralizing CO₂. Calcium ions are readily available in every cement plant from clinker and/or lime and/or various by-products and wastes. Silicates, aluminates and alumino-silicates are abundant as rocks and in many waste and by-products. Thus, the invention has a potential to produce highly reactive pozzolanic products useful as supplementary cementitious materials in every cement plant and other location with access to suitable sources of calcium ions like clinker, cement, and lime. Carbonation sequesters CO₂, for example the emissions from the cement or lime plant, but also from other exhaust gases. The invention is especially suitable for plants equipped with Leilac-like technology, since the lime source as well as a high purity CO₂ source are available there.

To simplify the description the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃. Compounds are mostly named by the pure form, without explicit mentioning of solid solutions, foreign ion substitution and impurities etc. as are usual in technical and industrial materials. As is known to the man skilled in the art knows, the exact composition of the phases described may vary due to substitution with foreign ions. Such compounds are comprised herein when mentioning the pure form unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

In the context of the invention cement is used to designate a material that, after mixing with water to form a paste, is able to develop mechanical strength by hydraulic reaction. Thus, cement denotes a ground clinker or analogous hydraulic phases obtained by other routes, like dicalcium silicate cement obtained by hydrothermal treatment. Binder or binder mixture means a material or mixture containing cement and developing mechanical strength by a hydraulic reaction with water, wherein the binder typically but not necessarily contains more components than the cement. Thus, geopolymer binder, super sulphated cement and composite cements are termed binder herein. A binder is used adding water or another liquid and mostly also aggregates as well as optionally admixtures and/or additives, to provide a paste that hardens resulting in a building element. Therefore, paste herein means a mixture of binder with water, especially but not limited to concrete and mortar.

A supplementary cementitious material (SCM) is herein defined as a pozzolanic and/or latent hydraulic material useful to replace a part of the cement in a binder or in a hydraulically hardening building material. Latent hydraulic materials have a composition that allows hydraulic reaction upon contact with water, wherein typically an activator is needed to enable hardening within technically feasible times. Activator means a substance that accelerates the hardening of latent hydraulic materials. It can be an additive like a sulfate or calcium (hydr)oxide and/or products of the hydraulic reaction of the ground clinker, e.g. calcium silicates that liberate calcium hydroxide during hydration. Pozzolanic materials are typically characterized by a content of reactive silica and/or alumina which form strength providing calcium silicate hydrates and calcium aluminate hydrates, respectively, during hydration of the clinker together with the calcium hydroxides liberated. These materials may contain reactive magnesium and iron and other reactive elements. In practice the boundary between latent hydraulic and pozzolanic materials is not clearly defined, for example fly ashes can be both, latent hydraulic and pozzolanic, depending on their calcium oxide content. Consequently, the term SCM designates both, latent hydraulic as well as pozzolanic materials. However, not reactive or only slightly reactive materials like limestone that substantially do not take part in the hydraulic reaction have to be clearly differentiated from SCM, with which they are sometimes summarized as mineral additions.

Hydraulically hardening building material means a wet mixture that is able to harden hydraulically, and comprises a cement or binder as well as optionally any other additives and/or admixtures contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material.

According to the invention a reactive pozzolanic product is obtained by autoclaving and carbonation of a feedstock comprising a source of calcium ions and materials containing silicates, aluminates and/or aluminosilicates with less than 10 wt.-% hydrated cement paste in the feedstock.

Suitable silicate, aluminate and/or aluminosilicate materials are natural minerals, such as but not limited to granite, rhyolite, quartz, feldspar, minerals containing them and mixtures of two or more thereof. Preferred silicate, aluminate and/or aluminosilicate materials are waste and by-products containing silicates, aluminates and/or aluminosilicates. Suitable are e.g., but not limited to, quarry dusts, calcined clays not achieving the required specification, ashes, and slags.

Typically, an amount of Si, Al, or Si and Al of at least 50 wt.-%, preferably at least 60 wt.-%, most preferred at least 70 wt.-%, is desired with respect to the total amount of silicate, aluminate and/or aluminosilicate materials. The content of calcium is usually lower than 25 wt.-%, often lower than 20 wt.-%, and most often below 15 wt.-%. These amounts are calculated as oxides, i.e. as SiO₂, Al₂O₃, Fe₂O₃, and CaO, respectively, and on a loss on ignition free basis. Loss on ignition is determined by heating at 950 °C.

A part of the calcium ions can be provided as component of the silicate, aluminate and/or aluminosilicate materials, but a source of calcium ions is always added to provide the needed amount of calcium ions. Useful sources of calcium ions are e.g. cement clinker and lime. Preferably waste or by-products such as but not limited to cement kiln dust, process dust from clinker grinding, calcium rich fly ash or bottom ash, slags, calcium carbide residues, etc. are used.

The amount of calcium ions should be at least 30 wt.-%, preferably at least 40 wt.-%, most preferred at least 50 wt.-%, with respect to the total amount of source of calcium ions. Further, 60 wt.-%, preferably at least 70 wt.-%, most preferred at least 80 wt.-%, of the calcium ions should be available for the hydrothermal reactions, i.e. not bound in carbonated phases or glass. A by-product or waste as source of calcium ions is typically characterized by a molar ratio Ca/(Si+Al) > 0.9, preferably > 1.2, most preferred > 1.5.

If cement kiln dust is used as calcium source, chloride and sulfate concentration are preferably controlled to ≤ 5 wt.-% and ≤ 10 wt.-%, respectively, calculated as oxides. In the case of CKD as calcium source, lower process emissions are obtained, down to about -250 kg CO₂/t SCM constituted by the product obtained by carbonation of the hydrate product compared to ~0 kg CO₂/t SCM if dedicated CaO produced from limestone is used as the calcium source. A restriction of chloride and sulfate in the product, for example to chloride < 2 wt.-%, preferably < 1 wt.-%, most preferred < 0.5 wt.-%, and/or sulfate < 10 wt.-%, preferably < 5 wt.-%, most preferred < 2 wt.-% in the final product, is usually beneficial.

The particle size distribution (PSD) of the silicate, aluminate and/or aluminosilicate materials and of the source of calcium ions is not specifically restricted. However, smaller particles normally react faster so that a D₉₀ of 250 µm, preferably a D₉₀ of 180 µm, most preferred a D₉₀ of 150 µm is adjusted. In case materials have too coarse particles they can be ground with devices known per se. It is no problem to treat also very fine materials, but usually the D₁₀ is from 0.1 to 50 µm, preferably from 0.5 to 20 µm, and most preferred from 1 to 10 µm. PSD is measured with laser diffractometry.

A molar ratio of Ca:(Si+Al) from 0.4 to 1.2, preferably from 0.6 to 1.0, most preferred from 0.7 to 0.9, is adjusted in the autoclave. For this, available silicate, aluminate and/or aluminosilicate materials and one or more source(s) of calcium ions are blended in suitable proportions. Additionally, the molar ratio Al/Si is preferably adjusted to lower than 0.5, more preferred lower than 0.4 and most preferred lower than 0.3.

In a preferred embodiment the silicate, aluminate and/or aluminosilicate material(s) is(are) co-ground with the source(s) of calcium ions to mix and homogenize the feedstock for the autoclave.

For the hydrothermal treatment water is added, unless one or more of the silicate, aluminate and/or aluminosilicate material(s) and/or source(s) of calcium ions used already provides enough water. The water:solids weight ratio in the autoclave preferably ranges from 0.2 to 10, more preferred from 0.3 to 5, most preferred from 0.4 to 3.

It is an advantage of the present invention that comparably mild conditions are useful for hydrothermal treatment. The temperature in the autoclave usually ranges from 105 to 300 °C, preferably from 110 to 250 °C, most preferred from 120 to 200 °C. The overpressure developing in the closed autoclave at 120 °C or above is typically sufficient to transform the silicate, aluminate and/or aluminosilicate material(s) in the presence of calcium ions to the hydrate product. The hydrate product comprises calcium-silicate hydrates (C-S-H), calcium-aluminate hydrates (C-A-H) and/or calcium-silicate-aluminate hydrates (C-S-A-H). Stirring is beneficial to avoid segregation and solidification of the material, but not necessary for the reaction to occur.

Subsequently, carbonation of the hydrate product can proceed at pressurized or pressure free conditions and produces a pozzolanic product composed of calcium carbonate and one, two, or all three of silica gel, alumina gel and silica-alumina gel.

The hydrate product can be carbonated in the autoclave or, preferably, is transferred to another reactor for carbonation. Both wet and semidry carbonation are particularly suitable for the hydrate product. Thus, it is neither necessary nor desirable to dry the hydrate product. Of course, some water can be separated from the hydrate product before carbonation, e.g. by filtration and/or decantation. Separated water is preferably recycled into the hydrothermal treatment.

In principle any carbon dioxide can be used for carbonation. Preferably, carbon dioxide containing exhaust gas, optionally after concentration, is used. One especially preferred carbon dioxide source is exhaust gas from a lime kiln operated with Leilac technology (indirect calcination) to provide exhaust gas comprising almost only CO₂. Indirect limestone calcination by microwave, calcinators and/or kilns operating in the oxyfuel mode etc. are also preferred sources for the CO₂.

The concentration of CO₂ during carbonation should range from 1 Vol.-% to 99 Vol.-%, preferably from 2 Vol.-% to 98 Vol.-%, most preferred from 3 Vol.-% to 97 Vol.-%.

An absolute pressure from ambient to 25 bars is suitable. If over pressure is applied, from 1.1 to 10 bars are preferred.

The temperature during carbonation can range from ambient, e.g. 15 °C to 30 °C, up to 50 °C, or 80 °C, or 99 °C. Preferably, carbonation takes place at ambient temperature. Carbonation can also serve to cool an exhaust gas used to provide the carbon dioxide. In that case, usually higher temperatures result in the carbonation device.

If desired, additional material(s) enhancing carbonation and/or improving the properties of the carbonates can be added for carbonation or already to the feedstock/during hydrothermal treatment. Typically, additional material will be included in an amount from 0.001 to 1 wt.-% with respect to the total feedstock. Usually, substances that improve the properties of the cement or hydraulic building material made with the pozzolanic product obtained according to the invention are added to the cement or building material, but some can also accelerate the carbonation. In the latter case their addition to the carbonation (or even hydrothermal treatment) step is advantageous. Preferably, substances for enhancing the carbonating process or mixtures of two or more thereof are used as additional material.

Suitable materials include substances that improve dissolution of CO₂ in the solution like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof; halogenides; ethylenediaminetetraacetic acid (EDTA) or others. Additionally enzymes such as carbonic anhydrase can be used to enhance carbonation efficiency and modify the properties of the reaction products. Also amino acids, e.g. aspartic acid, serine, arginine; as well as ammonium salts, e.g. ammonium chloride, ammonium sulfate and ammonium nitrate; are useful, especially to provide the calcium carbonate component of the pozzolanic product in a metastable form. Such forms show e.g. a reactivity as calcium carbonate cement not found in calcite. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar water soluble substances.

It is also possible to add substances providing alkali metal ions so that sulfate ions present are kept in the liquid as alkali sulfate as described in not prior published EP 21185792.5, the content of which is incorporated herein in its entirety.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinyl-sulfonic acids, styrenesulfonate, citric acid and other organic acids, polysaccharides and phosphonates, polycarboxylates.

Furthermore, it is possible to add admixtures that modify properties of the hydraulic building material or the building structure made from the composite cement comprising the pozzolanic product according to the invention already to the feedstock or to the hydrate product (usually those will be added to the building material or cement).

Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/binder ratio normally provides an increase of strength, such admixtures are commonly used.

Air entraining agents are also able to improve flowability and can be used for this aim or for other reasons such as, but not limited to, density modifications, compactibility improvements etc. Useful air entraining agents are e.g. surface active substances, especially ones based on soaps from natural resins or synthetic nonionic and ionic tensides.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides).

It is also possible to add admixtures that are designed to modify the rheology properties, i.e. rheology modifiers like e.g. polycarboxylates, lignosulfonates, starch, Karoo gum, bentonite clay, polyvinyl alcohol, and mixtures thereof.

All admixtures are used in the amounts known as such, wherein the amount is adapted to a specific binder and special needs in the known manner.

Additives can be added as well to the feedstock or hydrate product, but usually those are added to the composite cement or the hydraulic building material. Usual and useful additives are e.g. fillers (especially limestone and other stone dust), pigments, reinforcing elements, self-healing agents etc. All these can be added in the amounts known per se.

In one preferred embodiment the hydrothermal treatment and carbonation step are carried out as continuous operation. The feedstock, comprising silicate, aluminate, and/or silicate-aluminate materials and the source of calcium ions, is mixed with water to form a slurry as specified above. The slurry is fed into a tube at its top and moves down along the tube so that the hydrostatic pressure increases to a desired level controlled by tube length and slurry density. At the bottom of the tube, the slurry is heated to a desired temperature below the boiling point, which is controlled by the pressure. The heated slurry leaves the first tube and rises in a second tube. Preferably, the second tube is arranged around the first tube so that effective heat transfer between rising and sinking slurries is achieved. During the rising, CO₂-containig gas and/or liquid is/are added and mixed with the slurry so that sufficient CO₂ for the carbonation step is provided. At the top of the second tube, the slurry is collected, the solids are separated and dried to provide the pozzolanic product. The liquid is usually recycled into fresh slurry and/or re-saturated with CO₂ as CO₂-containig liquid. CO₂ can originate e.g. from gas from kiln in a wet scrubber. All other parameters are the same as described above.

The pozzolanic product obtained by carbonation comprises calcium carbonate as well as silica, alumina, and/or silica-alumina gel. Thus, it is a highly reactive SCM and especially useful for manufacturing composite cements. Since the carbonation is able to process all emissions from the limestone calcination of cement clinker production the method according to the invention can result in a CO₂-neutral SCM.

The pozzolanic product is usually dried for storage and use. It can be ground to adjust its PSD. Suitable particle sizes are D₉₀ below 200 µm, preferably D₉₀ below 150 µm, most preferred D₉₀ below 100 µm.

The pozzolanic product can also be subjected to a thermal treatment at a temperature ranging from 120 to 350 °C, preferably from 150 to 300 °C, most preferred from 180 to 250 °C, until constant mass to enhance its reactivity even more.

Further, the pozzolanic product can be used in the form of a slurry, i.e. without drying as described in EP 3 808 713 A1, the contents of which are incorporated herein in their entirety.

For use as SCM, the pozzolanic product is blended with an hydraulic cement, especially with Portland cement clinker, to manufacture a composite cement.

The content of the SCM in the composite cement can vary depending on the application and technical requirements. Useful SCM amounts are e.g. from 1 to 5 wt.-% of the composite cement, up to 10 wt.-% or 20 wt.-%, or 30 wt.-%, or 40 wt.-%, or 50 wt.-%, or 60 wt.-%, or 70 wt.-%, or 80 wt.-%, or 90 wt.-%, but not limited to.

Suitable hydraulic cements are e.g. Portland cement and cements based on Portland clinker, alite based cements, belitic cements, cements based on calcium aluminate clinker, cements based on calcium sulfoaluminate clinker, cements based on calcium sulfoaluminate-belite clinker, cements based on calcium ferrite clinker, and mixtures of them, but not limited to.

The pozzolanic product can also be added as SCM to the hydraulic building material, especially during concrete mixing.

The composite cement and/or hydraulic building materials made from it can further comprise admixtures and/or additives as is known per se. Suitable substances are as described above as additional material for adding to the carbonation step and/or feedstock.

The composite cement can also comprise one or more other SCM, i.e. the composite cement can be a ternary, quaternary, or even more components blend. Suitable other SCM are e.g. but not limited to fly ash, ground granulated blast furnace slag, natural and synthetic pozzolan and calcined clay. Naturally, the amounts of all components in a specific composite cement add up to 100 %, so if SCM and hydraulic cement are the sole components their amounts add up to 100 %, when there are other components, the amount of SCM and hydraulic cement is less than 100 %.

Further, the pozzolanic product can be used to make alkali activated binders like Roman cement, hybrid cements, and geopolymer binders.

Composite cements and alkali activated binders comprising the pozzolanic product are suitable for all uses where Portland (composite) cements or alkali activated binders from known silica(-alumina) gels have been used so far. Typical examples of applications are precast and ready mix concrete, concrete products, structural concrete according to EN 206, dry mix mortars, glues and special products based on hydraulic cements, geotechnical applications such as grouts and soil stabilization etc. The useful w/b ratios are from 0.1 to 2, preferred 0.25 to 1, and most preferred from 0.3 to 0.7.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Example 1

A cement plant equipped with Leilac technology is producing lime (100 % CaO is assumed, see also table 1 below) as an intermediate product and clinker (65 % CaO, 21 % SiO₂, 7 % Al₂O₃, rest others). Such clinker has process emissions of 510 kg CO₂/t clinker considering all CaO provided by CaCO₃. At the plant, high quality calcined clay (composed of 75 % metakaolin and 25 % quartz) and limestone (pure CaCO₃) are also available. They are used to produce a comparison composite cement CC3 with 30 % calcined clay and 20 % limestone with process emissions of 255 kg CO₂/t cement. Such cement also contains about 23 wt.-% of pozzolanic aluminosilicates (metakaolin).

According to the invention, the lime produced is blended with quartz (1 t of lime + 3.76 t quartz) and autoclaved. Hydrothermal C-S-H with C/S of about 0.8 is produced. The C-S-H is carbonated, binding 1.21 t of CO₂ and producing about 9 t of pozzolanic product 1 composed of about 42 wt.-% silica gel (dry basis) and 58 wt.-% CaCO₃. This SCM is used to produce a composite cement CC1 according to the invention. CC1 is composed of 50 wt.-% clinker and 50 wt.-% of the pozzolanic product 1 as SCM. The process emissions of such cement are 255 kg CO₂/t cement, calcium carbonate content is 29 wt.-% and the content of reactive pozzolanic silicates is 21 wt.-%.

Alternatively, clinker is used as calcium source for manufacturing the pozzolanic product. For this, 1 t of clinker is blended with 0.64 t of ground quartz, autoclaved and carbonated (0.4 t CO₂ is mineralized). The obtained pozzolanic product 2 is used to produce a second composite cement CC2 according to the invention. CC2 contains 50 wt.-% clinker and 50 wt.-% the pozzolanic product 2 as SCM. Process emissions of such cement are 255 kg CO₂/ t cement, calcium carbonate content 27 wt.-% and the content of reactive pozzolanic silicates is also 21 wt.-%.

Table 1 summarizes the composition of the materials in the example. In table 2 the compositions of the cements and the carbon dioxide emission associated with their production are listed and compared with a conventional Portland-Limestone cement CEM I.

**Table 1**

| **Material** | **Limestone** | **Lime** | **Clinker** | **Calcined clay** | **pozzolanic product 1** | **pozzolanic product 2** |
|---|---|---|---|---|---|---|
| CaO | 56 % | 100 % | 65 % | - | 32 % | 30 % |
| SiO₂ | | - | 21 % | 66 % | 42 % | 40 % |
| Al₂O₃ | | - | 7 % | 34 % | 3 % | |
| CO₂ | 44 % | - | 65 % | - | 25 % | 24 % |
| Others | | - | 7% | - | - | 3 % |
| Process emissions (t CO₂/t material) | 0 | 0.785 | 0.51 | 0 | 0 | 0 |
| Pozzolanic SiO₂+Al₂O₃ | - | - | - | 75 % | 42 % | 43 % |

**Table 2**

| **Cement** | **CC1** | **CC2** | **CC3** | **CEM I** |
|---|---|---|---|---|
| clinker | 50 % | 50 % | 50 % | 95 % |
| Limestone | - | - | 20 % | 5 % |
| Calcined clay | - | - | 30 % | - |
| pozzolanic product 1 | 50 % | - | - | - |
| pozzolanic product 2 | - | 50 % | - | - |
| Process emissions (t CO₂/t cement) | ≤ 0.255 | ≤ 0.255 | 0.255 | 0.485 |
| Pozzolanic SiO₂+Al₂O₃ | 21 % | 21 % | 23 % | 0 |
| Calcium carbonate | 29 % | 27 % | 30 % | 5 % |

As can be seen, composite cements CC1 and CC2 according to the invention contain significantly less clinker than CEM I, saving substantial amounts of carbon dioxide for clinker production. Nonetheless, their strength development is comparable to that of the composite cement CC3 containing a known reactive calcined SCM, namely clay, and limestone.

### Example 2

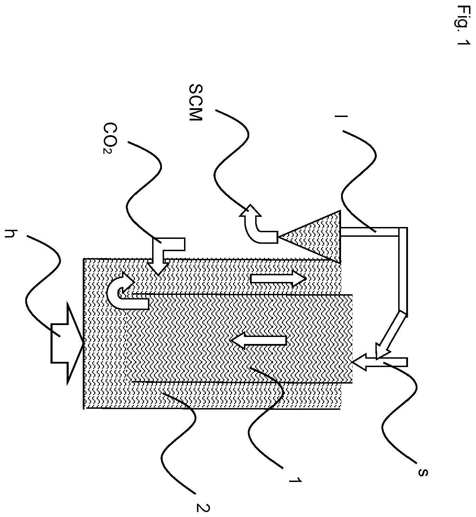

Figure 1 illustrates an exemplary device for carrying out the method according to the invention as continuous process. In the shown embodiment the hydrothermal treatment takes place in the first tube 1 and the carbonation in the second tube 2, arranged around the first tube 1. A feedstock from alumino-silicate material unsuitable as pozzolan and calcium rich fly ash is mixed with water and the formed slurry s with a solids content of e.g. 20 Vol.-% is introduced into the first tube 1 at its top. The slurry s has ambient temperature, e.g. 20 °C, or a bit higher, e.g. 40 °C from using the recycled liquid phase as water, and is under ambient pressure, 1 bar, when entering the first tube 1. Due to the force of gravity, the slurry sinks inside the first tube 1, e.g. with a volume flow of 0.009 m³/second. Thereby, in a device with e.g. 40 m height, 1 m inner diameter and 1.4 m outer diameter, a pressure of more than 4 bar is reached at the bottom of first tube 1. There, the slurry s is heated, e.g. with a burner or microwave device or electric resistance heating, to a temperature of e.g. 150 °C. The heated slurry passes into the second tube 2 in which it rises to the top, due to the slurry being continuously fed at the top of the first tube 1 and assisted by the heating. Carbon dioxide CO₂ is added into the second tube 2. Suitable are e.g. gaseous carbon dioxide like exhaust gas or concentrated exhaust gas, as well as aqueous solutions of carbon dioxide. During rising in the second tube 2, the hydrate product in the slurry s is carbonated. At the top of the second tube 2, the slurry is withdrawn and separated into pozzolanic product SCM and a liquid phase I. The liquid phase I is recycled into the device e.g. as mixing water to provide the slurry s. Alternatively, and not shown, all or a part of it can be used to provide a solution to scrub carbon dioxide from an exhaust gas in e.g. a spray scrubber and form a carbon dioxide rich solution to be added into the second tube 2. A residence time of slurry s in the device, i.e. from entering at the top of first tube 1 to withdrawal at the top of second tube 2, of 60 - 120 minutes is usually sufficient to accomplish the hydrothermal treatment and the carbonation.

### List of reference signs

- 1: first tube
- 2: second tube
- s: slurry from water and feedstock comprising silicate/aluminate/silicate-aluminate material and calcium ions
- h: heat provided e.g. by a burner, microwaves, electric heater, ...
- SCM: pozzolanic product
- CO₂: carbon dioxide, e.g. gas or liquid containing CO₂
- I: liquid after separation from pozzolanic product

## Claims

1. Method for manufacturing a pozzolanic product comprising:
- hydrothermal treatment of a feedstock comprising silicate, aluminate, and/or aluminosilicate materials, and a source of calcium ions, wherein the feedstock has a molar ratio of Ca:(Si+Al) from 0.4 to 1.2 and a maximum content of hydrated cement paste of 10 wt.-%, providing a hydrate product and
- subsequent carbonation of the hydrate product providing the pozzolanic product comprising calcium carbonate and silica gel, alumina gel and/or silica-alumina gel.

2. Method according to claim 1, wherein the molar ratio of Ca:(Si+Al) in the feedstock ranges from 0.6 to 1.0, preferably from 0.7 to 0.9, and/or a molar ratio Al/Si in the feedstock is lower than 0.5, preferably lower than 0.4 and most preferred lower than 0.3.

3. Method according to claim 1 or 2, wherein the maximum content of hydrated cement paste in the feedstock is 5 wt.-%, preferably 2 wt.-%.

4. Method according to one of claims 1 to 3, wherein the silicate, aluminate and/or aluminosilicate material is one of or a mixture of two or more of natural minerals, waste products, and by-products.

5. Method according to claim 4, wherein the natural mineral is one or more of granite, rhyolite, quartz, feldspar, and minerals containing them; and/or the waste or by-product is one or more of quarry dust, calcined clay not achieving the required specification, ash, and slag

6. Method according to one of claims 1 to 5, wherein, with respect to the total amount of silicate, aluminate and/or aluminosilicate material, an amount of Si, Al, or Si and Al in the silicate, aluminate and/or aluminosilicate material is at least 50 wt.-%, preferably at least 60 wt.-%, most preferred at least 70 wt.-%, and/or the content of calcium is lower than 25 wt.-%, or lower than 20 wt.-%, or lower than 15 wt.-%, all calculated as oxides, i.e. as SiO₂, Al₂O₃, Fe₂O₃, and CaO, respectively, and on a loss on ignition free basis.

7. Method according to one of claims 1 to 6, wherein the source of calcium ions is selected from waste or by-products, such as cement kiln dust, process dust from clinker grinding, calcium rich fly ash or bottom ash, slag, calcium carbide residues, and mixtures of two or more thereof.

8. Method according to one of claim 7, wherein the amount of calcium ions is at least 30 wt.-%, preferably at least 40 wt.-%, most preferred at least 50 wt.-%, with respect to the total amount of the source of calcium ions, and/or 60 wt.-%, preferably at least 70 wt.-%, most preferred at least 80 wt.-%, of the calcium ions are not bound in carbonated phases or glass, and/or the waste or by-product as source of calcium ions have a molar ratio Ca/(Si+Al) > 0.9, preferably > 1.2, most preferred > 1.5.

9. Method according to one of claims 1 to 8, wherein a water:solids weight ratio during hydrothermal treatment is adjusted to range from 0.2 to 10, preferably from 0.3 to 5, most preferred from 0.4 to 3, and/or a temperature ranges from 105 to 300 °C, preferably from 110 to 250 °C, most preferred from 120 to 200 °C.

10. Method according to one of claims 1 to 9, wherein a concentration of CO₂ during carbonation ranges from 1 % to 99 %, preferably from 2 % to 98 %, most preferred from 3 % to 97 %, and/or a pressure ranges from ambient to 25 bars, and/or a temperature ranges from ambient, e.g. 15 °C to 30 °C, to 50 °C or 80 °C or 99 °C.

11. Method according to one of claims 1 to 10, wherein additional material(s) enhancing carbonation and/or improving the properties of carbonates in the pozzolanic product and/or improving the properties of products made with the pozzolanic product are added to the carbonation and/or the feedstock, preferably substances that improve dissolution of CO₂ in the solution, substances that regulate the pH, substances providing alkali metal ions so that sulfate ions present are kept in the liquid as alkali sulfate, substances that modify the morphology of the precipitating calcium carbonate, admixtures, and additives.

12. Method according to one of claims 1 to 11, wherein the pozzolanic product is subjected to a thermal treatment at a temperature ranging from 120 to 350 °C, preferably from 150 to 300 °C, most preferred from 180 to 250 °C, until constant mass.

13. Pozzolanic product comprising calcium carbonate and silica gel or alumina gel or silica-alumina gel obtainable by the method according to one of claims 1 to 12.

14. Use of the pozzolanic product obtainable according to one of claims 1 to 12 as supplementary cementitious material, wherein the pozzolanic product is dried or used as a slurry.

15. Method for manufacturing composite cements comprising:
- hydrothermal treatment of a feedstock comprising silicate, aluminate, and/or aluminosilicate materials, and a source of calcium ions, wherein the feedstock has a molar ratio of Ca:(Si+Al) from 0.4 to 1.2 and a maximum content of hydrated cement paste of 10 wt.-%, to provide a hydrate product, and subsequent carbonation of the hydrate product to provide a pozzolanic product comprising calcium carbonate and silica gel, alumina gel and/or silica-alumina gel according to one of claims 1 to 12, and
- mixing the pozzolanic product with an hydraulic cement.

16. Method according to claim 15, wherein the hydraulic cement is selected from Portland cement and cement based on Portland clinker, alite based cement, belitic cement, cement based on calcium aluminate clinker, cement based on calcium sulfoaluminate clinker, cement based on calcium sulfoaluminate-belite clinker, cement based on calcium ferrite clinker, and mixtures of them.

17. Method according to claim 15 or 16, wherein the composite cement comprises from 1 to 5 wt.-% and up to 10 wt.-% or 20 wt.-%, or 30 wt.-%, or 40 wt.-%, or 50 wt.-%, or 60 wt.-%, or 70 wt.-%, or 80 wt.-%, or 90 wt.-% of pozzolanic product.

18. Composite cement obtainable by the method according to one of claims 15 to 17.

19. Composite cement according to claim 18, additionally comprising one or more of admixtures, additives, and other supplementary cementitious materials.
